Europäisches Patentamt

European Patent Office

Office européen des brevets

(19)

(11) Numéro de publication : **0 079 281**
**B1**

(12) **FASCICULE DE BREVET EUROPÉEN**

(45) Date de publication du fascicule du brevet :
09.10.85

(51) Int. Cl.⁴ : **G 21 C 15/18**

(21) Numéro de dépôt : **82402034.1**

(22) Date de dépôt : **05.11.82**

(54) **Installation comportant un réacteur nucléaire à eau sous pression équipé d'un dispositif de refroidissement du circuit primaire notamment.**

(30) Priorité : **05.11.81 FR 8120721**

(43) Date de publication de la demande :
**18.05.83 Bulletin 83/20**

(45) Mention de la délivrance du brevet :
**09.10.85 Bulletin 85/41**

(84) Etats contractants désignés :
**BE DE FR GB IT**

(56) Documents cités :
**DE-A- 2 642 960**
**FR-A- 2 294 517**
**FR-A- 2 334 175**
**FR-A- 2 352 376**
**GB-A- 1 419 582**
**US-A- 4 181 570**
**NUCLEAR ENGINEERING INTERNATIONAL, vol. 19, no. 218, juillet 1974, pages 566-571, Londres (GB); "The gas cooled breeder reactor-economic power with breeding"**
**NUCLEONICS, vol. 23, no. 10, octobre 1965, pages 56-59,63-64, New York (USA); H. GITTERMAN: "Reactor safeguard systems"**

(73) Titulaire : **FRAMATOME ET CIE.**
**Tour Fiat 1, Place de la Coupole**
**F-92400 Courbevoie (FR)**

(72) Inventeur : **Huet, Yves**
**44 avenue Marcel Cachin**
**F-92320 Chatillon-sous-Banneux (FR)**

(74) Mandataire : **Lavoix, Jean et al**
**c/o Cabinet Lavoix 2, Place D'Estienne D'Orves**
**F-75441 Paris Cedex 09 (FR)**

EP 0 079 281 B1

## Description

L'invention concerne une installation comportant un réacteur nucléaire à eau sous pression équipé d'un dispositif de refroidissement du circuit primaire pour la mise et le maintien en arrêt à froid de ce réacteur.

Les réacteurs nucléaires à eau sous pression comportent une enceinte de protection qui réalise le confinement et l'isolation des parties du réacteur renfermant des matières susceptibles d'avoir une certaine radioactivité, une cuve contenant le cœur du réacteur, un circuit primaire en communication avec la cuve du réacteur, dans lequel circule l'eau sous pression et au moins deux générateurs de vapeur disposés chacun sur une boucle du circuit primaire.

L'enceinte de protection et de confinement du réacteur est constituée par un bâtiment en béton de grande dimension qui renferme en particulier la cuve en acier du réacteur à l'intérieur de laquelle sont disposés les assemblages combustibles constituant le cœur du réacteur nucléaire où se produit le dégagement de chaleur au cours de la fission du combustible.

La cuve du réacteur nucléaire est remplie d'eau sous pression et reliée au circuit primaire à l'intérieur duquel circule cette eau qui s'échauffe au contact du cœur du réacteur.

Le circuit primaire est constitué d'au moins deux boucles distinctes en communication avec l'intérieur de la cuve du réacteur et sur chacune desquelles est placé un générateur de vapeur.

Lors du fonctionnement du réacteur nucléaire, l'eau sous pression est à une température voisine de 300 °C et à une pression de l'ordre de $155 \times 10^5$ Pa.

Le réacteur nucléaire ne fonctionne cependant pas de façon absolument continue et il est quelquefois nécessaire de provoquer un arrêt qui s'obtient en introduisant des barres de commande en matériau absorbant les neutrons dans le cœur du réacteur, en position d'insertion maximum. Cependant, l'eau du circuit primaire est encore à haute température et à haute pression et, suivant le type d'arrêt du réacteur qu'on désire provoquer, il est nécessaire de réaliser un refroidissement et une dépressurisation plus ou moins complets de l'eau du circuit primaire du réacteur.

En particulier, lorsqu'on doit effectuer un arrêt pour entretien du réacteur, ou un arrêt pour rechargement, il est nécessaire d'abaisser la température et la pression dans le circuit primaire, jusqu'à un niveau très bas.

Un tel arrêt du réacteur, avec abaissement de la température et de la pression du fluide primaire jusqu'à un niveau très bas est appelé arrêt à froid du réacteur.

Généralement, on parlera d'arrêts à froid lorsque la température dans la phase finale est inférieure à 90 °C, la pression étant inférieure à $28 \times 10^5$ Pa.

Lorsqu'on désire procéder au refroidissement du fluide primaire, lors d'une mise à l'arrêt à froid, on utilise dans un premier temps la capacité de refroidissement des générateurs de vapeur qu'on alimente en eau secondaire par le circuit d'alimentation de secours, la vapeur produite étant dirigée vers le condenseur par le contournement de la turbine ou rejetée à l'atmosphère. De cette façon, on peut refroidir l'eau sous pression circulant dans le circuit primaire jusqu'à une température voisine de 180 °C. Pour continuer le refroidissement du fluide primaire, on utilise un circuit spécial de refroidissement appelé circuit de refroidissement à l'arrêt (RRA).

Ce circuit de refroidissement à l'arrêt du réacteur est branché en dérivation sur le circuit primaire et comporte au moins un échangeur de chaleur et au moins une pompe ainsi qu'un jeu d'au moins deux vannes dont l'ouverture, en cas de mise en arrêt à froid du réacteur, permet la circulation d'eau primaire dans l'échangeur de chaleur, grâce à la pompe de circulation.

En réalité, le circuit de refroidissement est généralement branché en dérivation entre au moins deux boucles du circuit primaire ; il comporte deux échangeurs de chaleur qui effectuent le refroidissement de l'eau du circuit primaire par de l'eau de réfrigération amenée à ces échangeurs et deux pompes pour la circulation de l'eau primaire en cas de mise en arrêt à froid. Le circuit de refroidissement à l'arrêt comporte également une portion de circuit en dérivation par rapport à l'échangeur de chaleur qui permet de court-circuiter celui-ci et de régler le débit de l'eau primaire passant dans l'échangeur, grâce à des vannes de réglage.

L'ensemble constituant le circuit RRA peut être intégré dans l'enceinte de sécurité du réacteur ou au contraire disposé à l'extérieur de cette enceinte.

Dans le cas où l'ensemble est intégré à l'enceinte, on peut ainsi assurer le confinement du fluide primaire dans tous les cas de fonctionnement. En revanche, ceci impose des conditions plus contraignantes en ce qui concerne la maintenance, et plus exigeantes pour la conception du matériel.

Lorsque les équipements du circuit de refroidissement ne sont pas intégrés dans l'enceinte de sécurité, la conception et l'entretien des installations sont simplifiées mais on ne réalise plus un confinement du fluide primaire c'est-à-dire la protection radiologique et l'isolement des fuites éventuelles dans tous les cas, sauf au prix d'un autre confinement contenant les équipements non-intégrés dans le premier.

En outre, le circuit de refroidissement RRA peut avoir des fonctions auxiliaires différentes de l'extraction de chaleur dans le circuit primaire du réacteur à l'arrêt.

Par exemple, ce circuit peut assurer la décharge vers la station de purification du circuit de contrôle volumétrique et chimique du réacteur, lorsque la pression dans le circuit primaire est descendue au-dessous d'une certaine valeur voisine de $30 \times 10^5$ Pa. En effet, les orifices de détente prévus dans le circuit normal de décharge du circuit de contrôle volumétrique et chimique du réacteur sont inadaptés pour ces basses pressions.

Le circuit de refroidissement RRA peut également servir à la vidange de la piscine du réacteur vers le réservoir de stockage et de traitement de l'eau des piscines.

Enfin, ce circuit peut constituer une partie du circuit d'injection de sécurité basse pression permettant l'injection d'eau dans le circuit primaire en cas d'incident ou encore être intégré au système d'aspersion de l'encinte de sécurité.

Le but de l'invention est donc de proposer une installation comportant un réacteur nucléaire à eau sous pression, ce réacteur étant disposé à l'intérieur d'une enceinte de sécurité et équipé d'un dispositif de refroidissement du circuit primaire, pour la mise et le maintien en arrêt à froid de ce réacteur, ce dispositif comportant au moins une pompe et au moins un échangeur de chaleur disposés à l'extérieur de l'enceinte de sécurité du réacteur, l'échangeur de chaleur recevant de l'eau du circuit primaire, pour le refroidissement de cette eau par l'intermédiaire d'une conduite en dérivation sur laquelle sont disposées au moins deux vannes dont l'ouverture, en cas de mise en arrêt à froid du réacteur, permet la circulation d'eau primaire dans l'échangeur de chaleur grâce à la pompe, cette installation devant permettre le confinement de l'eau du circuit primaire dans tous les cas malgré un dispositif de refroidissement d'une conception simple et d'une grande facilité de maintenance ; le dispositif de refroidissement doit pouvoir effectuer également des tâches auxiliaires dans l'exploitation du réacteur.

Dans ce but, l'échangeur de chaleur et la pompe sont disposés à l'intérieur d'un local confinable attenant à l'enceinte de sécurité ayant en commun avec cette enceinte une paroi percée d'au moins une ouverture obturable de façon étanche et comportant, sur une au moins de ses parois qui ne sont pas communes avec l'enceinte de sécurité, une ouverture obturable de façon étanche pour la mise en communication du local avec l'espace extérieur à l'enceinte et deux ouvertures également obturables pour la mise en communication du local avec un circuit de ventilation, au moins un conduit dont la fermeture peut être obtenue par une vanne mettant en communication le local avec le puisard de l'enceinte de sécurité.

Afin de bien faire comprendre l'invention, on va maintenant décrire, en se référant aux figures jointes en annexe, un dispositif de refroidissement du circuit primaire d'une installation de réacteur nucléaire à eau sous pression, selon l'invention.

La figure 1 représente de façon schématique une boucle du circuit primaire d'un réacteur nucléaire à eau sous pression et le dispositif de refroidissement RRA de ce réacteur disposé à l'intérieur de l'enceinte de sécurité, suivant l'art antérieur.

La figure 2 représente, de façon schématique, un dispositif de refroidissement placé à l'intérieur d'un local confinable attenant à l'enceinte de sécurité d'un réacteur nucléaire à eau sous pression.

La figure 3 représente un dispositif de refroidissement placé dans un local confinable pouvant assurer les fonctions du système d'aspersion de l'enceinte de sécurité.

La figure 4 représente un dispositif de refroidissement placé dans un local confinable assurant la fonction de réfrigération de la piscine du combustible usé.

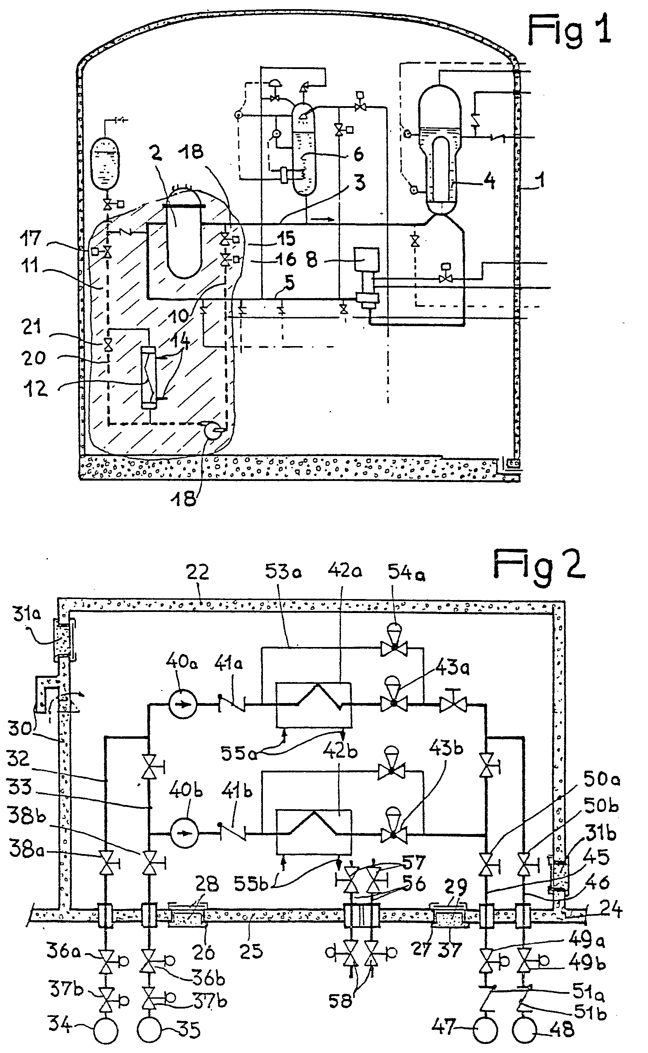

Sur la figure 1, on voit l'enceinte de sécurité 1 du réacteur nucléaire à l'intérieur de laquelle est placée la cuve 2 renfermant le cœur du réacteur. On a représenté une boucle du circuit primaire de façon schématique, cette boucle comportant une branche chaude 3 par laquelle l'eau échauffée sortant de la cuve du réacteur est emmenée au générateur de vapeur 4 et une branche froide 5 assurant le retour de l'eau sous pression refroidie après son passage dans le générateur de vapeur 4, à la cuve du réacteur.

Sur la branche chaude est d'autre part placé le pressuriseur 6. Une pompe primaire 8 assure la circulation de l'eau sous pression dans la boucle du circuit primaire.

Le circuit de refroidissement du réacteur de l'arrêt (RRA) comporte des canalisations 10 et 11 permettant le prélèvement d'eau sous pression dans le circuit primaire et son retour dans ce circuit après passage dans un échangeur de chaleur 12 alimenté en eau de refroidissement par un circuit 14.

Des vannes 15, 16 et 17 placées sur les canalisations 10 et 11 permettent d'isoler le circuit de refroidissement du circuit primaire ou au contraire de mettre ces deux circuits en communication.

Une pompe 18 permet de mettre en circulation, lorsque les vannes 15, 16 et 17 sont ouvertes, une partie du fluide primaire, pour son refroidissement à l'intérieur de l'échangeur 12.

Une portion 20 du circuit de refroidissement en dérivation par rapport à l'échangeur de chaleur 12 permet de court-circuiter celui-ci ou de régler le débit traversant l'échangeur grâce à une vanne 21.

Le dispositif représenté à la figure 1 qui correspond à l'art antérieur a l'avantage de permettre un confinement parfait de ce dispositif de refroidissement à l'intérieur de l'enceinte d'étanchéité 1.

En cas de fuite d'eau primaire sur le circuit de refroidissement, cette eau reste confinée dans l'enceinte.

En revanche, la maintenance du circuit de refroidissement est difficile puisque ce circuit est entièrement placé à l'intérieur de l'enceinte de sécurité. Sa conception doit être telle qu'il puisse fonctionner de façon suffisamment sûre puisque des interventions pour essais et maintenance à l'intérieur de l'enceinte de sécurité sont soit impossibles en conditions post-accidentelles, soit très difficiles à réaliser.

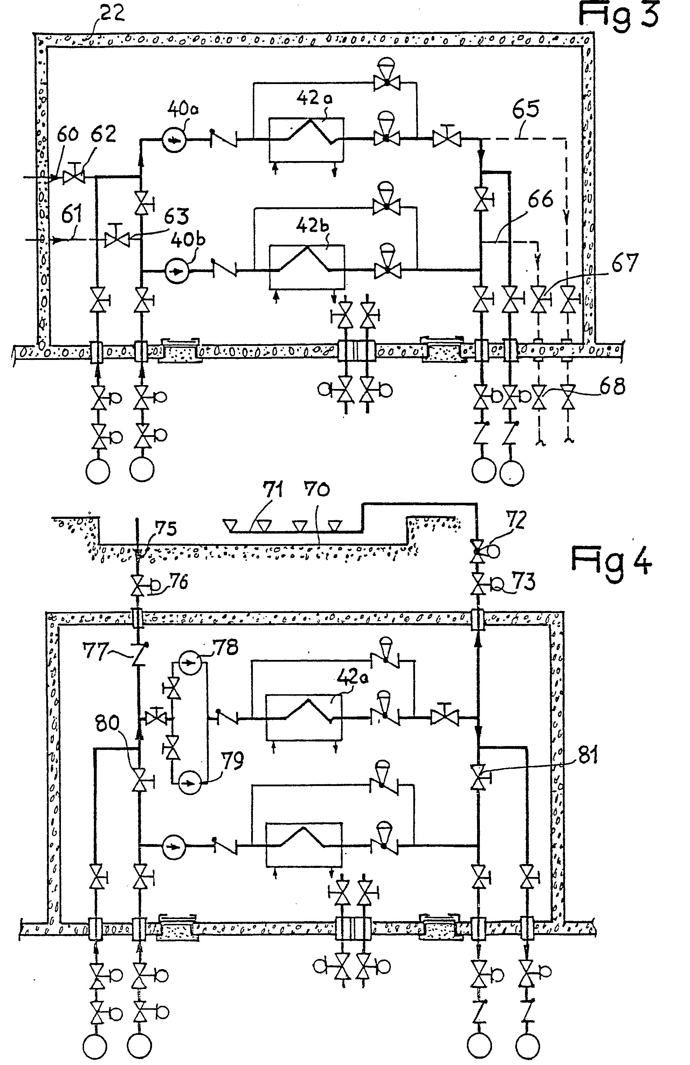

Sur la figure 2, on voit un dispositif de refroidissement suivant l'invention placé à l'intérieur d'un local confinable 22 attenant à l'enceinte de sécurité 24 du réacteur nucléaire à eau sous pression ayant en commun avec cette enceinte de sécurité la paroi 25.

Le local confinable 22 comporte trois autres parois communiquant avec l'espace extérieur à l'enceinte de sécurité du réacteur.

les murs de béton de ce local sont d'une épaisseur identique à la paroi de béton de l'enceinte de sécurité.

La paroi 25 commune au local 22 et à l'enceinte de sécurité 24 est percée d'ouvertures 26 et 27 qui peuvent être fermées par un double panneau d'obturation (28 et 29) respectivement. L'une des parois du local 22 communiquant avec l'extérieur de l'enceinte de sécurité est percée d'une ouverture d'accès 30 qui peut être fermée de façon étanche par une porte avec chicane d'accès ayant la même épaisseur que la paroi. Enfin, deux parois opposées du local 22 communiquant avec l'extérieur de l'enceinte de sécurité sont percées d'ouvertures 31a et 31b obturables de façon étanche et mettant le local 22 en communication avec un circuit de ventilation externe.

Le dispositif de refroidissement comporte des canalisations de prélèvement 32 et 33 reliées chacune à une branche chaude du circuit primaire (34 et 35). Ces canalisations 32 et 33 traversent de façon étanche la paroi 25, et son équipées de vannes d'obturation 36 et 37 à l'intérieur de l'enceinte et 38 à l'intérieur du local 22.

Les canalisations 32 et 33 sont reliées aux deux branches du circuit de refroidissement comportant chacune une pompe 40, un clapet anti-retour 41, un échangeur de chaleur 42 et une vanne de régulation de débit 43.

La sortie des branches du circuit de refroidissement est reliée à des canalisations 45 et 46 permettant le retour de l'eau primaire refroidie dans les branches froides 47 et 48 du circuit primaire.

Sur les canalisations 46 et 46 sont disposées des vannes 50 à l'intérieur du local 22 et des vannes 49 à l'intérieur de l'enceinte de sécurité 24. Sur ces canalisations sont également placés des clapets anti-retour 51, à l'intérieur de l'enceinte de sécurité, avant le piquage sur les branches froides.

En dérivation par rapport à chacun des échangeurs 42 est placée une conduite 53 équipée d'une vanne de réglage 54 permettant soit de court-circuiter l'échangeur de chaleur 42, soit de régler le débit d'eau primaire dans cet échangeur.

Chacun des échangeurs 42 est alimenté en eau de refroidissement par un circuit 55.

Des conduites 56 équipées de vannes 57 et 58 permettent de mettre en communication le local 22 avec le puisard de l'enceinte de sécurité 24.

Dans le cas du fonctionnement normal du réacteur nucléaire, le local 22 est totalement isolé de l'enceinte de sécurité par les panneaux doubles d'obturation 28 et 29. Les vannes de fermeture du circuit de refroidissement isolent totalement celui-ci du circuit primaire. De même, la communication entre le local 22 et le puisard de l'enceinte de sécurité est interrompue par fermeture des vannes 57 et 58.

Les panneaux 28 et 29 sont équipés de dispositifs de détection de fuite permettant de déceler tout défaut d'étanchéité entre l'enceinte de sécurité 24 et le local 22. Ce local est ventilé et conditionné par un circuit indépendant du circuit de ventilation et de conditionnement de l'enceinte de sécurité.

Toute opération d'essais d'entretien ou de réparation sur le circuit de refroidissement peut être effectuée aisément dans le local 22 qui est accessible grâce à l'ouverture 30.

Dans le cas d'un arrêt du réacteur précédant son refroidissement, on dispose d'une période assez longue avant la mise en service du dispositif de refroidissement puisque le réacteur est d'abord refroidi jusqu'à une température de 180 °C et la pression dans le circuit primaire est abaissée jusqu'à $28 \times 10^5$ Pa grâce aux générateurs de vapeur. Cette première phase, sans intervention du circuit de refroidissement du réacteur à l'arrêt, dure approximativement six heures.

Pendant cette période, on effectue toutes les opérations nécessaires pour la mise en fonctionnement du circuit de refroidissement. Ces opérations commencent par la fermeture de la ventilation du local 22 en obturant les ouvertures 31a et 31b et se poursuivent par le déverrouillage et l'ouverture des panneaux doubles 28 et 29 ainsi que des vannes permettant la mise en communication du local 22 avec le puisard de l'enceinte de sécurité 24.

On ouvre ensuite les vannes 38 et 50 sur les canalisations d'aspiration et de refoulement du circuit de refroidissement.

On ferme alors l'ouverture 30 et l'on verrouille la porte de fermeture pour isoler totalement le local 22 de l'extérieur. On peut alors effectuer le démarrage des pompes dont la commande n'est possible que si l'ouverture d'au moins un des panneaux de communication avec l'enceinte de sécurité du réacteur et d'au moins l'une des vannes de communication avec le puisard est assurée.

La mise en fonctionnement des pompes 40 permet alors la circulation d'une partie de l'eau du circuit primaire à l'intérieur des échangeurs 42 pour le refroidissement de cette eau, grâce à l'eau de refroidissement des circuits 55.

L'eau refroidie à l'intérieur du local 22 est ensuite refoulée par les canalisations 45 et 46 dans les branches froides 47 et 48 du circuit primaire.

Le refroidissement se poursuit jusqu'au moment où l'eau du circuit primaire atteint une température et une pression correspondant à l'arrêt du réacteur à froid.

Pendant le fonctionnement du dispositif de refroidissement à l'intérieur du local 22, ce local est ventilé par le dispositif de ventilation de l'enceinte de sécurité du réacteur, une circulation s'établissant par les deux ouvertures 28 et 29 dont l'une est disposées à la partie inférieure et l'autre à la partie supérieure du local 22 accolé à l'enceinte de sécurité.

Si des fuites d'eau primaire apparaissent sur le circuit de refroidissement à l'intérieur du local 22, ces fuites sont collectées vers une fosse de réception et dirigées par les tuyauteries 56 vers le puisard de l'enceinte de sécurité 24.

Lorsque le refroidissement et la dépressurisation du circuit primaire sont terminés, une intervention dans l'enceinte de sécurité du réacteur est possible et le local 22 est lui-même accessible par la porte d'accès 30.

On voit que le dispositif de refroidissement suivant l'invention, placé à l'intérieur d'un local confinable accolé à l'enceinte de sécurité du réacteur, présente à la fois les avantages d'un dispositif intégré dans l'enceinte de sécurité, lors de son fonctionnement pour le refroidissement du circuit primaire et les avantages d'un dispositif placé à l'extérieur de l'enceinte, lorsque le réacteur est en fonctionnement normal.

Sur la figure 3, on voit le dispositif de refroidissement suivant l'invention dont les éléments sont signalés par les mêmes repères que sur la figure 2, comportant des branchements supplémentaires lui permettant d'assurer également la fonction d'aspersion de l'enceinte de sécurité du réacteur.

A cet effet, les deux branches du circuit de refroidissement ont été reliées à des canalisations 60 et 61 équipées de vannes de fermeture 62 et 63 permettant d'amener dans le circuit de refroidissement l'eau soit d'un réservoir extérieur soit du puisard de l'enceinte de sécurité.

A son extrémité de refoulement, le circuit de refroidissement est relié à des canalisations 65 et 66 équipées de vannes 67 et 68 respectivement intérieures et extérieures au local 22, pour la liaison du circuit de refroidissement recevant l'eau des puisards aux rampes d'aspersion de l'enceinte de sécurité du réacteur.

En cas d'élévation de pression dans l'enceinte, si le système d'aspersion est déclenché, l'eau du réservoir de remplissage de la piscine du réacteur est injectée à l'intérieur de l'enceinte par les rampes d'aspersion disposées à l'intérieur de celle-ci.

L'eau est récupérée à la base de l'enceinte de sécurité dans le puisard puis entraînée par les pompes 40 dans le circuit de refroidissement, grâce aux canalisations 60 et 61, les vannes 62 et 63 étant ouvertes. Cette eau passe dans les échangeurs 42, est refroidie puis parvient aux rampes d'aspersion par l'intermédiaire des canalisations 65 et 66.

Le dispositif de refroidissement permet donc un fonctionnement en cycle fermé avec l'eau récupérée au niveau du puisard de l'enceinte de sécurité.

Sur la figure 4, le dispositif de refroidissement a été représenté avec des modifications permettant son utilisation pour la réfrigération de l'eau de la piscine du combustible usé.

Le dispositif de refroidissement à l'arrêt est utilisé pour le refroidissement de la piscine de combustible usé 70 et pour les différentes autres fonctions du système de traitement et de réfrigération de l'eau des piscines.

Dans cette piscine est placée une rampe de distribution 71 recevant l'eau refroidie dans le dispositif RRA par l'intermédiaire de vannes 72 et 73.

L'eau de la piscine à refroidir est évacuée ver le local du dispositif de refroidissement par une conduite 75 reliée à l'une des branches du dispositif de refroidissement par l'intermédiaire d'une vanne 76 et d'un clapet anti-retour 77.

Pour permettre au dispositif de refroidissement à l'arrêt de servir de dispositif de réfrigération de l'eau des piscines on a modifié l'une des branches de ce dispositif de refroidissement en disposant deux pompes 78 et 79 en parallèle en amont de l'échangeur. Ces deux pompes 78 et 79 remplacent la pompe 40a des figures 2 et 3.

Le dispositif RRA et le dispositif de refroidissement des piscines ne sont pas sollicités, pour l'évacuation de chaleur, à leur puissance maximum, au même moment, puisque le refroidissement des piscines ne devient important que pendant un arrêt à froid, lorsqu'une partie du combustible a été sortie de la cuve et placée dans la piscine du combustible. La charge thermique maximum du dispositif de réfrigération des piscines correspond sensiblement à la moitié de la charge thermique maximum du dispositif RRA.

Lorsque le dispositif de refroidissement à l'arrêt est utilisé pour le refroidissement de l'eau de la piscine du combustible usé, les vannes 80 et 81 permettant d'interrompre la jonction entre les deux branches du dispositif de refroidissement sont fermées et seule la branche du dispositif de refroidissement comportant les pompes 78 et 79 est utilisée.

En effet, la sécurité de fonctionnement du dispositif de réfrigération de la piscine du combustible usé demande le doublement des organes actifs, c'est-à-dire en particulier de la pompe de circulation de l'eau à refroidir.

Lorsque le dispositif est utilisé en RRA la charge thermique pour le refroidissement des piscines est à son minimum, ce qui autorise son arrêt momentané.

Lorsque le dispositif est utilisé pour le refroidissement des piscines du combustible à sa charge thermique maximum, le réacteur est dans une phase d'arrêt à froid. La cuve est ouverte et la fonction de refroidissement du circuit primaire peut être effectuée alternativement avec la fonction de refroidissement des piscines. L'eau prélevée dans les piscines par la conduite 75 est refroidie dans l'échangeur 42a puis renvoyée à la piscine au niveau de la rampe 71.

Pendant tout ce fonctionnement, la porte 30 du local 22 peut rester ouverte et l'on peut facilement avoir accès, par exemple à l'une des pompes utilisées sur le circuit de réfrigération.

On voit donc que les principaux avantages du dispositif suivant l'invention sont de permettre une isolation complète du local renfermant le dispositif de refroidissement à l'arrêt, pendant le fonctionnement normal du réacteur, la constitution d'une seule enceinte isolée par mise en communication de l'enceinte de sécurité du réacteur et du local du dispositif de refroidissement, lors de la mise en service de celui-ci et une utilisation facilitée du dispositif de refroidissement à l'arrêt pour des fonctions annexes telles que l'aspersion de l'enceinte de sécurité et la réfrigération de la piscine du combustible usé.

On peut imaginer un dispositif de refroidissement plus complexe que celui qui vient d'être décrit avec un nombre plus important de pompes et d'échangeurs disposés à l'intérieur du local étanche. On peut également imaginer l'utilisation d'un local d'une forme quelconque accolé à l'enceinte de sécurité du réacteur par son côté intérieur ou par son côté extérieur.

On peut également imaginer d'autres modifications de ce dispositif de refroidissement à l'arrêt pour permettre l'accomplissement de fonctions annexes différentes de celles qui ont été envisagées dans la description ci-dessus.

Enfin le dispositif suivant l'invention s'applique dans le cas de tous les réacteurs nucléaires à eau sous pression.

## Revendications

1. Installation comportant un réacteur nucléaire à eau sous pression, ce réacteur étant disposé à l'intérieur d'une enceinte de sécurité (24) et équipé d'un dispositif de refroidissement du circuit primaire, pour la mise et le maintien en arrêt à froid de ce réacteur, ce dispositif comportant au moins une pompe (40) et au moins un échangeur de chaleur (42) disposés à l'extérieur de l'enceinte de sécurité du réacteur, l'échangeur de chaleur (42) recevant de l'eau du circuit primaire, pour le refroidissement de cette eau par l'intermédiaire d'une conduite en dérivation (32, 33) sur laquelle sont disposées au moins deux vannes (38) dont l'ouverture, en cas de mise en arrêt à froid du réacteur, permet la circulation d'eau primaire dans l'échangeur de chaleur (42) grâce à la pompe (40), caractérisée en ce que l'échangeur de chaleur (42) et la pompe (40) sont disposés à l'intérieur d'un local confinable (22) attenant à l'enceinte de sécurité (24) ayant en commun avec cette enceinte une paroi (25) percée d'au moins une ouverture (26, 27) obturable de façon étanche et comportant, sur une au moins de ses parois qui ne sont pas communes avec l'enceinte de sécurité (24), une ouverture (30) obturable de façon étanche pour la mise en communication du local (22) avec l'espace extérieur à l'enceinte (24) et deux ouvertures (31a et 31b) également obturables pour la mise en communication du local (22) avec un circuit de ventilation, au moins un conduit (56) dont la fermeture peut être obtenue par une vanne (57) mettant en communication le local (22) avec le puisard de l'enceinte de sécurité (24).

2. Installation suivant la revendication 1, caractérisée en ce que le dispositif de refroidissement comporte deux branches équipées chacune d'une pompe (40) et d'un échangeur de chaleur (42) reliés à deux branches chaudes (34, 35) et à deux branches froides (47, 48) du circuit primaire par des canalisations (32, 33 ; 45, 46) équipées de vannes de fermeture (36, 37, 38 ; 49, 50) permettant la mise en communication d'une branche chaude et d'une branche froide avec les extrémités de chacune des branches du circuit de refroidissement.

3. Installation suivant l'une quelconque des revendications 1 et 2, dans le cas où le circuit de refroidissement est utilisé pour assurer les fonctions du système d'aspersion de l'enceinte de sécurité du réacteur, caractérisée en ce que la conduite (32, 33) du circuit de refroidissement en dérivation sur le circuit primaire est reliée, par l'intermédiaire de vannes (62, 63), à une réserve d'eau extérieure au puisard de l'enceinte de sécurité par des canalisations (60, 61), en amont de la pompe (40) et de l'échangeur (42), et qu'en aval de la pompe (40) et de l'échangeur (42), la conduite en dérivation sur le circuit primaire est reliée par l'intermédiaire de vannes (67, 68) aux rampes d'aspersion de l'enceinte de sécurité, par des conduites (65 et 66) traversant de façon étanche la paroi (25) commune au local (22) et à l'enceinte de sécurité (24).

4. Installation suivant l'une quelconque des revendications 1 et 2, dans le cas où le circuit de refroidissement est utilisé pour assurer la fonction de réfrigération de la piscine (70) du combustible usé, caractérisée en ce que le circuit de refroidissement comporte au moins une branche sur laquelle sont disposées deux pompes (78) et (79) en parallèle, en amont d'un échangeur de chaleur (42) cette branche communiquant, par l'intermédiaire d'au moins une vanne (76), en amont des pompes (78) et (79) avec une conduite (75) de recueil de l'eau de la piscine du combustible usé, et en aval de l'échangeur (42), par l'intermédiaire de vannes (72, 73), avec une rampe (71) d'alimentation de la piscine du combustible usé en eau refroidie.

## Claims

1. Installation comprising a Pressurized Water Nuclear Reactor, this reactor being disposed inside a safety enclosure (24) and equipped with a device for cooling the primary circuit, for effecting and maintaining a cold shutdown of this reactor, this device comprising at least one pump (40) and at least one heat exchanger (42), arranged outside the safety enclosure of the reactor, the heat exchanger (42) receiving water from the primary circuit in order to cool this water, via a by-pass pipe (32, 33), on which are arranged at least two valves (38, 50), the opening of which, in the event of a cold shutdown of the reactor, allows primary water to flow in the heat exchanger (42) by means of the pump (40), characterised in that the heat exchanger (42) and the pump (40) are arranged inside an isolatable room (22) adjacent to the safety enclosure (24), having, in common with this enclosure, a wall (25) provided with at least one opening (26, 27) which can be sealed in a leaktight manner, and possessing, on at least one of its walls which are not common to the safety enclosure (24), an opening (30), which can be sealed in a leaktight manner, for bringing the room (22) into communication with the space outside the enclosure (24), and two openings (31a and 31b), which can also be sealed, for bringing the room (22) into communication with a ventilation circuit, at least one duct (56), which can be closed by a valve (57), bringing the room (22) into communication with the sump of the safety enclosure (24).

2. Installation according to Claim 1, characterised in that the device for cooling comprises two branches, each equipped with a pump (40) and a heat exchanger (42), connected to two hot legs (34, 35) and to two cold legs (47, 48) of the primary circuit by pipelines (32, 33 ; 45, 46) equipped with closing valves (36, 37, 38 ; 49, 50) making it possible to bring a hot leg and a cold leg into communication with the ends of each of the branches of the cooling circuit.

3. Installation according to either one of Claims 1 and 2, in the case where the cooling circuit is used to carry out the functions of the sprinkler system of the safety enclosure of the reactor, characterised in that the pipe (32, 33) of the cooling circuit, by passing the primary circuit, is connected, *via* valves (62, 63) to an external water reservoir and to the sump of the safety enclosure by pipelines (60, 61), upstream of the pump (40) and the exchanger (42), and in that, downstream of the pump (40) and the exchanger (42), the pipe by-passing the primary circuit is connected, via valves (67, 68), to the rows of sprinklers of the safety enclosure by pipes (65 and 66) passing in a leaktight manner through the wall (25) common to the room (22) and to the safety enclosure (24).

4. Installation according to either one of Claims 1 and 2, in the case where the cooling circuit is used to carry out the function of cooling the pool for the spent fuel, characterised in that the cooling circuit comprises at least one branch on which two pumps (78) and (79) are arranged in parallel, upstream of a heat exchanger (42), this branch communicating, *via* at least one valve (76), upstream of the pumps (78) and (79), with a pipe (75) for collecting the water from the pool for the spent fuel, and, downstream of the exchanger (42), *via* valves (72, 73), with a row of distributors (71) for supplying cooled water to the pool for the spent fuel.

**Patentansprüche**

1. Anlage mit einem Druckwasserkernreaktor, der im Inneren eines Sicherheitsbehälters (24) angeordnet und mit einer Kühleinrichtung für den Primärkühlkreis zum Abkülen und Kalthalten des Reaktors beim Abschalten ausgerüstet ist, wobei diese Einrichtung mindestens eine Pumpe (40) und mindestens einen Wärmetauscher (42) aufweist, die außerhalb des Sicherheitsbehälters des Reaktors angeordnet sind, der Wärmetauscher (42) mit abzukühlendem Wasser aus dem primärkühlkreis über die Umgehungsleitung (32, 33) versorgt wird, in der mindestens zwei Ventile (38) angeordnet sind, deren Öffnung beim Abstellen des Reaktors die von der Pumpe (40) bewirkte Zirkulation von Wasser aus dem Primärkühlkreis im Wärmetauscher (42) licht, dadurch gekennzeichnet, daß der Wärmetauscher (42) und die Pumpe (40) im Inneren eines an den Sicherheitsbehälter (24) angrenzenden, dicht verschließbaren Raums (22) angeordnet sind, dieser Raum mit dem Sicherheitsbehälter eine mit mindestens einer dicht verschließbaren Öffnung (26, 27) versehene Wand gemeinsam hat und in einer der nicht mit dem Sicherheitsbehälter (24) gemeinsamen Wände eine dicht verschließbare Öffnung (30) für die Verbindung des Raums (22) mit dem Raum außerhalb des Sicherheitsbehälters (24) und zwei ebenfalls verschließbare Öffnungen (31a-31b) für den Anschluß des Raumes (22) an einen Belüftungskreis aufweist, wobei mindestens eine Leitung (56), die durch ein Ventil (57) verschlossen werden kann, den Raum (22) mit dem Sammelschacht des Sicherheitsbehälters (24) verbindet.

2. Anlage nach Anspruch 1, dadurch gekennzeichnet, daß die Kühleinrichtung zwei Zweige aufweist, die jeweils mit einer Pumpe (40) und einem Wärmetauscher (42) versehen sind, die an zwei heiße Zweige (34, 35) und zwei kalte Zweige (47, 48) des Primärkreises über mit Schließventilen (36, 37, 38 ; 49, 50) versehene Kanäle (32, 33 ; 45, 46) angeschlossen sind, wobei die Schlußventile die Verbindung eines heißen Zweigs und eines kalten Zweigs mit den Enden jedes Zweiges des Kühlkreises ermöglichen.

3. Anlage nach Anspruch 1 oder 2, bei der der Kühlkreis dazu verwendet wird, den Betrieb des Besprengungssystems des Sicherheitsbehälters des Reaktors zu gewährleisten, dadurch gekennzeichnet, daß die Leitung (32, 33) des Kühlkreises im Nebenschluß zum Primärkreis über Ventile (62, 63) an einen Wasserbehälter außerhalb des Sammelschachtes des Sicherheitsbehälters mittels Kanälen (60, 61) stromauf bezüglich der Pumpe (40) und des Wärmetauschers (42) angeschlossen ist und daß die Leitung im Nebenschluß zum Primärkreis stomab bezüglich der Pumpe (40) und des Wärmetauschers (42) über Ventile an die Besprengungsringe des Sicherheitsbehälters über Leitungen (65 und 66) angeschlossen ist, wobei die Leitungen (65, 66) die dem Raum (22) und dem Sicherheitsbehälter (24) gemeinsame Wandung (25) dicht schliessend durchqueren.

4. Anlage nach einem der Ansprüche 1 oder 2, wobei der Kühlkreis dazu verwendet wird, die Abkühlung des Abkühlbeckens (70) der verbrauchten Brennstäbe zu gewährleisten, dadurch gekennzeichnet, daß der Kühlkreis mindestens einen Zweig aufweist, in dem zwei Pumpen (78, 79) parallel zueinander stromauf bezüglich eines Wärmetauschers (42) angeordnet sind, wobei dieser Zweig über mindestens ein Ventil stromauf bezüglich der Pumpen (78, 79) mit einer Sammelleitung (75) für das Wasser des Abkühlbeckens für verbrauchte Brennstäbe und stromab bezüglich des Wärmetauschers (42) über Ventile (72, 73) mit einer Anlage (71) zur Versorgung des Abkühlbeckens für verbrauchte Brennstäbe mit abgekühltem Wasser in Verbindung steht.

Fig 1

Fig 2

0 079 281

Fig 3

Fig 4